**Europäisches Patentamt**

**European Patent Office**

**Office européen des brevets**

(19)

(11) Veröffentlichungsnummer: **0 196 559**
**B1** .

(12)

## EUROPÄISCHE PATENTSCHRIFT

(45) Veröffentlichungstag der Patentschrift: **18.07.90**

(51) Int. Cl.⁵: **G 01 F 1/60, G 01 F 1/58**

(21) Anmeldenummer: **86103793.5**

(22) Anmeldetag: **20.03.86**

(54) **Verfahren und Einrichtung zur intermittierenden Messung des Durchflusses einer Flüssigkeit.**

(30) Priorität: **03.04.85 CH 1459/85**

(43) Veröffentlichungstag der Anmeldung:
**08.10.86 Patentblatt 86/41**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**DE-A-3 029 791**
**DE-A-3 133 330**
**DE-B-2 744 845**
**US-A-3 504 541**

**Die Akte enthält technische Angaben, die nach
dem Eingang der Anmeldung eingereicht
wurden und die nicht in dieser Patentschrift
enthalten sind.**

(73) Patentinhaber: **GWF Gas- & Wassermesserfabrik
AG**
**Obergrundstrasse 119**
**CH-6002 Luzern (CH)**

(72) Erfinder: **Mathis, Peter**
**Schützenmatte B7**
**CH-6362 Stansstad (CH)**

(74) Vertreter: **Reichmuth, Hugo Werner**
**INVENTIO AG Seestrasse 55**
**CH-6052 Hergiswil/NW (CH)**

## Beschreibung

Die vorliegende Erfindung betrifft ein Verfahren zur intermittierenden Messung des Durchflusses einer elektrisch leitenden Flüssigkeit mit Hilfe eines induktiven Strömungswandlers sowie eine Einrichtung zur Durchführung dieses Verfahrens.

Mit der europäischen Patentschrift Nr. 27181 ist eine Einrichtung zur intermittierenden Messung des Durchflusses einer Flüssigkeit bekannt geworden, die einen induktiven Strömungswandler enthält. Dieser Strömungswandler enthält ein Messrohr aus einem amagnetischen und elektrisch nicht leitenden Material an dem eine Messpule zur Erzeugung eines das Messrohr durchsetzenden Magnetfeldes angebracht ist. Im Inneren des Messrohres sind zwei Elektroden angeordnet, die einander diametral gegenüberliegen und deren gedachte Verbindungslinie das Magnetfeld senkrecht schneidet. Die von den Elektroden ankommenden Leitungen sind an die Eingänge eines Verstärkers angeschlossen, dessen Ausgang über einen Tiefpass und im Gegentakt arbeitende Schalter an Speicher eines maximalen bzw. minimalen Wertes des Elektrodensignales angeschlossen ist. Die Ausgänge dieser Speicher sind an die Eingänge eines Differenzverstärkers angeschlossen, dessen Ausgang über einen Mittelwertbildner an ein Anzeigegerät angeschlossen ist. Zur Erzeugung des Magnetfeldes ist die Magnetspule mit einer Steuerschaltung verbunden, die der Magnetwicklung einen Strom mit dreieckförmigem Verlauf einprägt und darüber hinaus auch die Abtastzeitpunkte der Schalter in der Auswerteschaltung steuert.

Die Auswerteschaltung dieser bekannten Einrichtung braucht eine Netzspannung mit einer Frequenz von 50 Hz. Diese Netzspannung steht jedoch nicht in jedem Fall zur Verfügung, wie z.B. dann, wenn der Durchflussmesser in einer abgeschiedenen Gegend betrieben werden muss. In solchen Fällen muss der Durchflussmesser aus einer Batterie gespeist werden und in solchen Fällen ist somit der bekannte Durchflussmesser gar nicht verwendbar. Bei der Speisung aus einer Batterie entstehen allerdings Probleme betreffend den Langzeitbetrieb des Durchflussmessers sowie die Genauigkeit der Anzeige der durchgeflossenen Menge von Flüssigkeit während des Betriebes eines solchen Durchflussmessers.

Mit der DE—A—3 133 330 ist ein magnetischinduktiver Durchflussmesser bekannt geworden, der von einer Gleichspannungsquelle gespeist wird. Hierbei wird das zur Messung erforderliche Wechselfeld durch Zusammenwirken der Erregerspule des Aufnehmers mit einer Steuerschaltung erzeugt. In einer bevorzugten Ausführung bilden ein Kondensator und die Erregerspule einen die Frequenz des Wechselfeldes bestimmenden Schwingkreis, der bei Resonanzfrequenz arbeitet, so dass keine Blindleistung aufgenommen wird und die Gleichspannungsquelle nur die die Ohmschen und eisenverluste deckende Wirkleistung liefern muss. Bei diesem Durchflussmesser kann also Blindleistungsaufnahme vermieden werden, wobei jedoch dauernd Wirkleistung zur Deckung der Ohmschen und Eisenverluste zugeführt werden muss.

Die Aufgabe der vorliegenden Erfindung ist, ein Verfahren und eine Einrichtung zur intermittierenden Messung einer Durchflussmenge anzugeben, bei welchen die genannten Probleme nicht auftreten.

Diese Aufgabe wird beim einleitend genannten Verfahren erfindungsgemäss so gelöst, wie dies im Anspruch 1 definiert ist. Ferner wird die genannte Aufgabe bei der eingangs genannten Einrichtung erfindungsgemäss so gelöst, wie dies im Anspruch 3 definiert ist.

Die mit der Erfindung erzielten Vorteile sind insbesondere darin zu sehen, dass zusätzlich zu dem mit dem intermittierenden Messverfahren erwirkten geringen Energiebedarft, weitere Energie dadurch gespart wird, dass bei der Magnetfelderzeugung lediglich die Ohmschen Verluste beim Feldaufbau gedeckt werden müssen, da die dabei aufgewendete Blindleistung beim Feldabbau zurückgenommen wird. Durch den geringen Energieverbrauch wird die Verwendung von Batterien ermöglicht, die in die Durchflussmesseinrichtung eingebaut werden können.

Nachstehend werden Ausführungsbeispiele der vorliegenden Erfindung anhand der beiliegenden Ziechnungen näher erläutert. Es zeigt:

Fig. 1 schematisch einen Strömungswandler und eine an diesen angeschlossene Auswerteschaltung der vorliegenden Einrichtung,

Fig. 2 perspektivisch den in der Einrichtung gemäss Fig. 1 verwendeten Strömungswandler,

Fig. 3 die Schaltungsanordnung eines Magnetfeldtreibers für den Strömungswandler nach Fig. 2,

Fig. 4 einen Differenzverstärker der einen der Bestandteile der Auswerteschaltung nach Fig. 1 darstellt,

Fig. 5 einen Komparator der einen der Bestandteile der Auswerteschaltung nach Fig. 1 darstellt,

Fig. 6 Kurven, welche einen durch den Komparator nach Fig. 5 gesteuerten Durchgang von Oszillationen darstellen und

Fig. 7 Signalverläufe, welche das Verständnis der Funktion der vorliegenden Einrichtung erleichtern sollen.

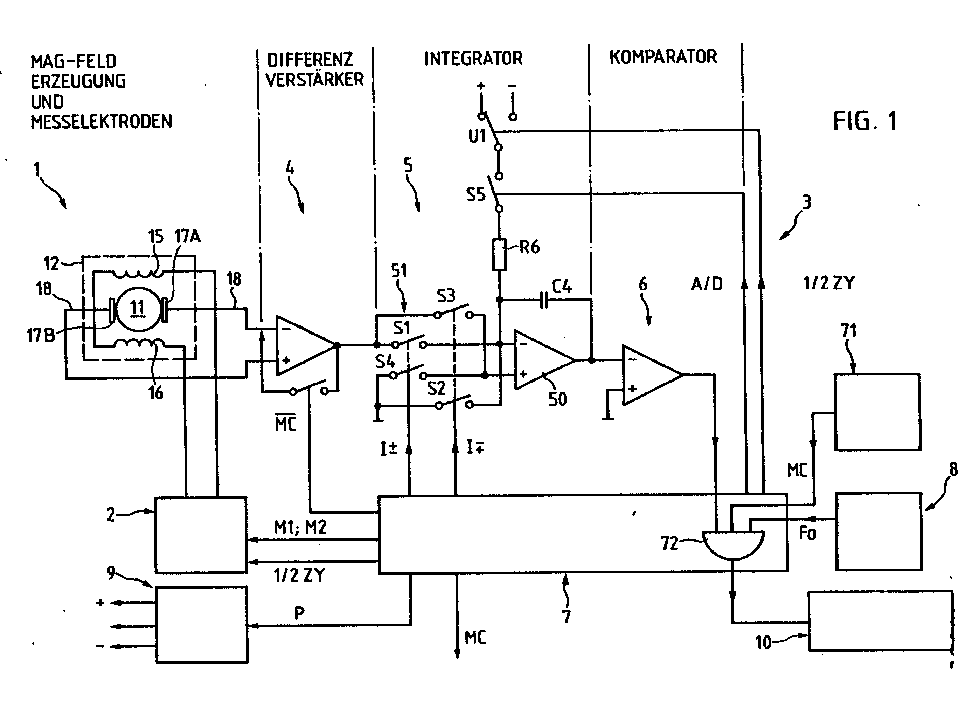

Die in Fig. 1 dargestellte Einrichtung zur intermittierenden Messung des Durchflusses einer Flüssigkeit weist einen induktiven Strömungswandler 1 auf. Durch diesen Strömungswandler 1 geht ein in einem vertikalen Schnitt dargestelltes Messrohr 11 aus einem amagnetischen und elektrisch nicht leitenden Material hindurch, in dem sich jene Flüssigkeit befindet, deren Durchfluss gemessen werden soll.

An den Strömungswandler 1 ist (Fig. 1) eine Schaltungsanordnung angeschlossen, die einen Magnetfeld-Treiber 2, eine Auswerteschaltung und einen Taktgenerator 71 umfasst. Dieser Taktgenerator 71 erzeugt Taktsignale, die eine taktsynchrone Funktion der einzelnen Teile dieser Einrichtung ermöglichen.

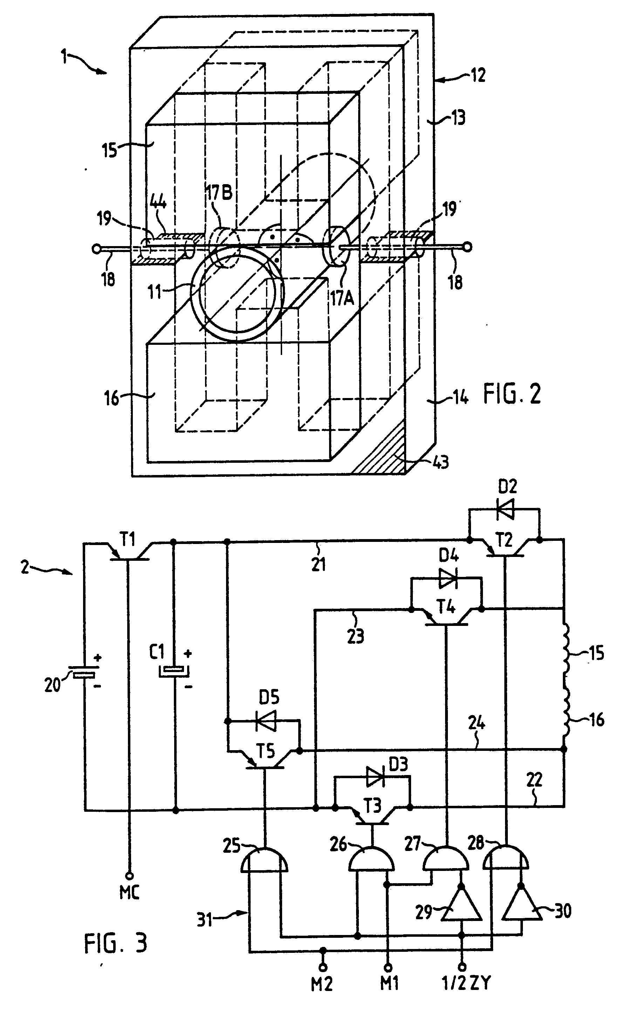

Der Strömungswandler 1 (Fig. 2) enthält einen symmetrisch ausgebildeten Kern 12, der aus zwei E-förmigen Hälften 13 und 14 besteht. Der mittlere Schenkel der jeweiligen Kernhälfte 13 bzw. 14 ist mit einer Erregerspule 15 bzw. 16 versehen, wobei diese Spulen elektrisch in Serie geschaltet sind. Zwischen den Endflächen der inneren Schenkel der Kernhälften 13 und 14 befindet sich das Messrohr 11, so dass im Inneren dieses Messrohres 11 ein Magentfeld durch die Spulen 15 und 16 erzeugt werden kann. Dem Messrohr 11 sind Elektroden 17A und 17B zugeordnet, die einander diametral gegenüberliegen und deren gedachte Verbindungslinie das durch die Spulen 15 und 16 erzeugte Magnetfeld senkrecht schneidet. Die Anschlüsse 18 der Elektroden 17A und 17B gehen durch Kanäle 19 hindurch, die im Bereich der Stirnflächen der äusseren Schenkel der E-förmigen Kernhälften 13 und 14 vorhanden sind. Eine Hälfte des jeweiligen Kanals 19 ist in der Endpartie eines der äusseren Schenkel ausgeführt.

Je grösser die Geschwindigkeit der Flüssigkeit im Messrohr 11 ist, um so höher ist die Spannung, die an den Elektroden 17A, 17B induziert wird. Da die Funktionsweise solcher Strömungswandler an sich bekannt ist, werden wir hier auf die Arbeitsweise des Strömungswandlers 1 nicht näher eingehen. Wegen dem bei der vorliegenden Einrichtung angestrebten möglichst kleinen Energieverbrauch ist es wichtig, dass der vorliegende Strömungswandler 1 ein Signal liefert, das einen möglichst grossen Abstand vom Rauschen aufweist. Deswegen ist es bei diesem Strömungswandler von besonderer Bedeutung, dass der Abgang der Elektrodenanschlüsse 18 aus dem Magnetkern 12 möglichst symmetrisch ist. Denn eine solche Ausbildung der Elektrodenanschlüsse 18 bewirkt, dass nur wenig direktes Signal aus dem Magnetfeld in die Anschlüsse 18 eingestreut wird.

Die Auswerteschaltung enthält einen Differenzverstärker 4, dessen Eingänge mit den Anschlüssen 18 der Elektroden 17A und 17B des Strömungswandlers 1 verbunden sind und dessen Ausgang an einen Integrator 5 angeschlossen ist. Auf den Integrator 5 folgt in der Auswerteschaltung ein Komparator 6, dessen Ausgang an eine digitale Einheit 7 angeschlossen ist. Diese digitale Einheit 7 steuert unter anderem auch die Zusammenarbeit unter den einzelnen Teilen der vorliegenden Einrichtung. An die digitale Einheit 7 sind ferner ein Oszillator 8, eine Speiseeinheit 9 sowie eine Anzeigeeinheit 10 für die gemessenen Strömungswerte angeschlossen.

Eine als Magnetfeld-Treiber 2 verwendete Schaltungsanordnung ist in Fig. 3 dargestellt. Parallel zu einer Batterie 20 ist ein Kondensator C1 angeschlossen, wobei zwischen diesen ein erster elektronischer Schalter T1 geschaltet ist. Dieser Schalter T1 enthält einen Transistor, der über seine Basis steuerbar ist, wobei die Emitter-Kollektor-Strecke desselben die Batterie 20 mit dem Kondensator C1 verbindet. Die Erregerspulen 15 und 16 des Strömungswandlers 1, die, wie gesagt, in Serie liegen, sind über ein erstes Paar von Leitungen 21 und 22 zum Kondensator C1 ebenfalls parallel geschaltet. In diese Leitungen 21 und 22 sind ein zweiter elektronischer Schalter T2 samt einer Diode D2 bzw. ein dritter Schalter T3 samt einer Diode D3 geschaltet. Bei den Schaltern handelt es sich wiederum um Transistoren, die durch die digitale Einheit 7 über ihre Basis steuerbar sind. An die Enden der seriellen Kombination der Erregerspulen 15 und 16 ist ein zweites Paar von Leitungen 23 und 24 angeschlossen. Die anderen Enden dieser Leitungen 23 und 24 sind jedoch, im Unterschied zum ersten Paar von Leitungen 21 und 22, an den entgegengesetzten Elektroden des Kondensators C1 angeschlossen. In der jeweiligen Leitung 23 bzw. 24 des zweiten Leitungspaares sind weitere elektronische Schalter T4, D4 und T5, D5 eingeschaltet, die ebenfalls über die Basis des jeweiligen Transistors T4 bzw. T5 steuerbar sind.

Der erste Schalter T1 ist direkt durch ein Signal MC des Taktgenerators 71 steuerbar, während die übrigen Schalter T2 bis T5 über ein aus logischen Gliedern 25, 26, 27, 28, 29 und 30 bestehendes Netzwerk 31 steuerbar sind.

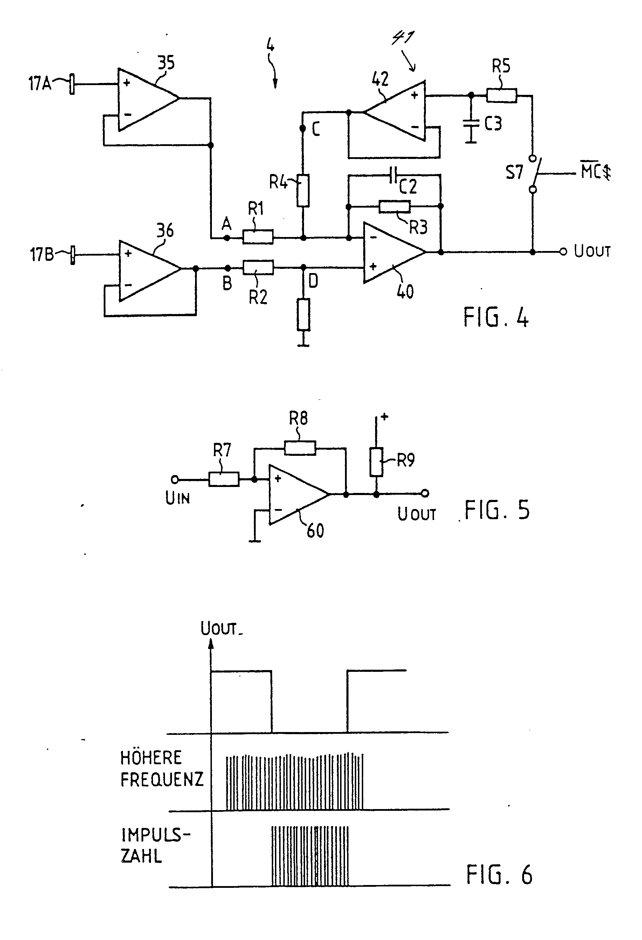

Der an den Strömungswandler 1 angeschlossene Differenzverstärker 4 ist in Fig. 1 nur schematisch dargestellt. Eine detaillierte Darstellung dieses Verstärkers 4 befindet sich in Fig. 4. An die Elektroden 17A, 17B des Strömungswandlers 1 ist je ein Operationsverstärker 35 bzw. 36 angeschlossen, die als Spannungsfolger beschaltet sind. Diese Verstärker 35 und 36 wirken als Impedanzwandler und sie sollen möglichst nahe an den Elektroden 17A und 17B des Strömungswandlers 1 angeordnet sein, damit das Nutzsignal durch andere Signale möglichst nicht gestört wird. Die Ausgänge der Impedanzwandler 35 und 36 sind über Widerstände R1 und R2 an die Eingänge eines Operationsverstärkers 40 angeschlossen. Im Gegenkopplungsast dieses Operationsverstärkers 40 befinden sich ein weiterer Widerstand R3 sowie ein weiterer Kondensator C2, die parallel zueinander geschaltet sind. Dem operationsverstärker 40 ist ferner eine sogenannten sample-hold-Schaltung 41 zugeordnet, deren Funktion an sich bekannt ist. Sie enthält einen weiteren Spannungsfolger 42, dessen Ausgang über einen Widerstand R4 an den invertierenden Eingang des Operationsverstärkers 40 angeschlossen ist. Der nicht invertierende Eingang des weiteren Spannungsfolgers 42 ist über einen Kondensator C3 geerdet und zugleich über einen Entladewiderstand R5 und einen Schalter S7 an den Ausgang des Operationsverstärkers 40 angeschlossen. Der Schalter S7 ist durch die digitale Einheit 7 mit Hilfe eines Ausgangssignals $\overline{MC}$ betätigbar.

Der Ausgang des Differenzverstärkers 4 wird dem bereits genannten Integrator 5 zugeführt, der in Fig. 1 dargestellt ist. Dieser enthält einen Operationsverstärker 50, in dessen Rückkopplungsast sich ein Kondensator C4 befindet. Die Eingänge dieses Operationsverstärkers 50 sind an einen doppelten Schalter 51 angeschlossen, welcher Schaltkontakte S1, S2, S3 und S4 enthält.

Von diesen Schaltkontakten sind S1 und S4 und dann S2 und S3 miteinander mechanisch gekoppelt. Das erste Kontaktpaar S1, S4 ist über einen Ausgang I-plus,minus der digitalen Einheit 7 betätigbar, während das andere Kontaktpaar S2, S3 durch einen weiteren Ausgang I-minus,plus ansteuerbar ist. Der invertierende Eingang des Operationsverstärkers 50 ist über einen Enladewiderstand R6 an einen Schalter S5 angeschlossen, dessen Schaltzunge über einen Ausgang A/D aus der digitalen Einheit 7 betätigbar ist. Der andere Festkontakt dieses Schalters S5 ist an einen Umschalter U1 angeschlossen, dessen Umschaltzunge durch einen weiteren Ausgang 1/2ZY aus der digitalen Einheit 7 betätigbar ist. Die Zunge des Umschalters U1 ist zwischen einer positiven und einer negativen Vorspannung umschaltbar.

Der Ausgang des Operationsverstärkers 50 im Integrator 5 ist an den Eingang des Komparators 6 angeschlossen, der in Fig. 5 näher gezeigt ist. Dieser enthält einen Operationsverstärker 60, dem ein Widerstand R7 vorgeschaltet ist. Der Rückkopplungsast dieses Verstärkers 60 enthält einen weiteren Widerstand R8 und der Ausgang des Verstärkers 60 ist über einen noch weiteren Widerstand R9 an einen positive Spannung angeschlossen.

Der Ausgang des Komparators 6 wird einem UND-Tor 72 in der digitalen Einheit zugeführt. An weitere Eingänge des UND-Tores 72 sind der Oszillator 8 sowie der Taktgenerator 71 angeschlossen. Der Ausgang des UND-Tores 72 ist mit dem Eingang der Anzeigeeinheit 10 verbunden.

Die digitale Einheit 7 enthält einen Mikroprozessor, der so programmiert ist, dass die einzelnen Bestandteile der vorliegenden Einrichtung in dem für die Arbeitsweise derselben vorgesehenen Zeitpunkt ihre Arbeitsweise aufnehmen und dass diese in einem darauf folgenden und vorbestimmten Zeitpunkt ihre Funktion beenden. Diesem Zusammenspiel der Bestandteile der Einrichtung liegt die durch den Taktgenerator 71 erzeugte Taktfrequenz zugrunde.

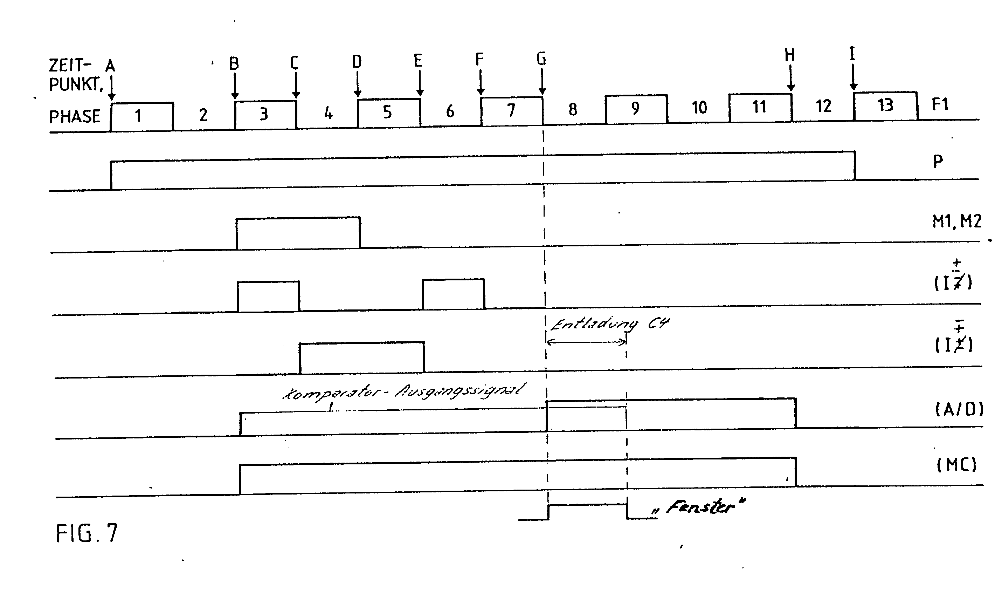

Die Arbeitsweise der vorliegenden Einrichtung ist aus den sich in Fig. 7 befindlichen Zeitdiagrammen ersichtlich. Die digitale einheit 7 hat in der Tat nur zwei Eingänge. Sie empfängt das Ausgangssignal vom Komparator 6 sowie eine Schwingung von konstanter Frequenz aus dem Oszillator 8. Der Taktgenerator 71 ist ebenfalls einer der Bestandteile der digitalen Einheit 7 aber wegen der Bedeutung desselben für die Arbeitsweise der vorliegenden Einrichtung ist er ausserhalb der Einheit 7 dargestellt.

Bei der Beschreibung der Arbeitsweise der vorliegenden Einrichtung beginnen wir mit dem Zeitpunkt A (Fig. 7), in welchem die Speisung des analogen Teiles der vorliegenden Einrichtung durch das Signal P aus der digitalen Einheit eingeschaltet wird. Diese Speisung bleibt bis zur Beendigung der jeweiligen Einzelmessung eingeschaltet. Während der Phase 1 nach der Einschaltung der Einrichtung werden die Offset-Spannung, galvanische Spannungen und Hysterese grob kompensiert.

Nach einer Pause während der Phase 2 beginnt die Phase 3 mit dem Zeitpunkt B. In diesem Zeitpunkt ist der Transistor T1 gesperrt und der Kondensator C1 auf die volle Spannung der Batterie 20 geladen. Durch die Signale M1, M2 und 1/2ZY aus der digitalen Einheit werden die elektronischen Schalter T2 und T3 in den direkten Leitern 21 und 22 mittels der logischen Glieder 25 bis 30 leitend gemacht, so dass durch die Erregerspulen 15 und 16 Strom fliesst. Dieser Strom bewirkt, dass sich im Strömungswandler 1 und somit auch in der durch das Messrohr 11 fliessenden Flüssigkeit ein Magnetfeld aufbaut. Die Grösse des Stromes und die Zeitspanne, während welcher dieser Strom durch die Spulen 15 und 16 fliesst, ist so bemessen, dass die Intensität des Magnetfeldes im Stromwandler 1 möglichst linear ansteigt und dass kein Sättigungszustand der Erregerspulen 15 und 16 erreicht wird. Nach dem Ablauf dieser Zeitspanne werden die Schalter T2 und T3 gesperrt. Während der darauf folgenden Phase wird das Magnetfeld in den Spulen 15 und 16 abgebaut, und zwar etwa gleich schnell, wie es aufgebaut worden ist. Während des Aufbauens und des Abbauens des Magnetfeldes liefert der Strömungswandler 1 über seine Elektroden 17A und 17B Nutzsignal, das durch die an diese angeschlossene Schaltungsanordnung ausgewertet wird.

Beim Sperren der Schalter T2 und T3 entsteht in den Spulen 15 und 16 eine hohe Gegeninduktionsspannung, so dass Strom in entgegengesetzter Richtung durch die parallel zu diesen Schaltern T2 und T3 geschalteten Dioden D2 und D3 in den Kondensator C1 zurückfliessen kann. Dadurch wird ein Teil der Energie des Kondensators C1, die zum Aufbau des magnetischen Feldes in den Spulen 15 und 16 erforderlich war, für den Kondensator C1 zurückgewonnen. Für die nächste Einzelmessung muss die Batterie 20 nur noch jene Energie liefern, welche während der vorangehenden Messung verbraucht worden ist, um das Nutzsignal zu erzeugen. Dies ist einer der Gründe, warum die vorliegende Einrichtung so sparsam arbeitet.

Das Ausgangssignal des Differenzverstärkers 4, der an den Elektroden des Strömungswandlers 1 angeschlossen ist, gelangt an den invertierenden Eingang des Operationsverstärkers 50 des Integrators 5.

Im vorstehend genannten Zeitpunkt B wird auch die Integration im Integrator 5 gestartet. Hierbei ist der doppelte Schalter 51 durch das Ausgangssignal I-plus,minus so eingestellt, dass die Kontakte S1 und S4 desselben geschlossen sind, während die übrigen Kontakte S2 und S3 dieses Schalters 51 offen sind. Im Zeitpunkt C werden die Kontakte S1 und S4 wieder geöffnet und die Kontakte S2 und S3 mittels des Ausgangssignales I-minus,plus geschlossen, wodurch das Nutzsignal dem Integrator 5 mit umgekehrter Polarität zugeführt wird. Im Zeitpunkt E werden die Kontakte S1 und S4 wieder geschlossen und die Kontakte S2 und S3 wieder geöffnet, wobei die Polarität des Nutzsignales ein zweites Mal umgekehrt wird.

Mit dem Ende der Demagnetisation (Zeitpunkt F in Fig. 7) endet auch die Integration. Während der Magnetisierungs- und der Demagnetisierungsphase ist der am Verstärker 50 angeschlossene Kondensator C4 durch das Nutzsignal geladen worden. Der Integrator 5 bildet somit aus dem verstärkten, dynamischen Signal der Elektroden 17A und 17B eine Summe. Der Wert dieser Summe entspricht der Ladung des Kondensators C4.

Wird dem Eingang des Komparators 6 das Ausgangssignal des Integrators 5 zugeführt, so schaltet der Komparator 6, so dass an seinem Ausgang ein Signal konstanten Spannungspegels auftritt (Zeitpunkt B). Im Zeitpunkt 6, nach Beendigung der Integration, sendet die digitale Einheit 7 ein Signal A/D zum Leitend-Machen des Schalters S5 aus. Hierbei entlädt sich der Kondensator C4 über den Widerstand R6 und den Schalter S5.

Das Ausgangs Signal des Komparators 6 wird einem der Eingänge des UND-Tores 72 zugeführt, wobei an einen weiteren Eingang dieses Tores 72 der Oszillator 8 angeschlossen ist. Solange sich der Kondensator C4 entladet befindet sich am Eingang des Komparators 6 das Ausgangssignal des Integrators 5 und somit auch ein Signal am betreffenden Eingang des UND-Tores 72. Da am weiteren Eingang des UND-Tores 72 das Signal des Oszillators 8 liegt, erscheint das Oszillatorsignal auch am Ausgang des UND-Tores 72, der an die Anzeigeeinheit 10 angeschlossen ist. Nachdem sich der Kondensator C4 im Integrator 5 über den Widerstand R6 entladen hat, verschwindet das Ausgangssignal des Integrators 5 und damit auch das des Komparators 6, so dass das UND-Tor 72 schliesst. Der Komparator 6 steuert somit die Breite eines Fensters, während welchem das Oszillatorsignal durch das UND-Tor 72 fliessen kann. Aus der Anzahl der Schwingungen von konstanter Frequenz, die während des genannten Fensters durch das UND-Tor 72 geflossen sind kann man die Grösse des Nutzsignals und somit auch die Grösse der durch den Strömungswandler 1 geflossenen Menge von Flüssigkeit bestimmen. Die Anzeigeeinheit 10 enthält elektrische Schaltkreise, welche die Zählung der genannten Schwingungen durchführen können.

Es ist sehr wichtig, dass der Strömungswandler in bezug auf die Elektroden 17A, 17B möglichst symmetrisch ist. Zu diesem Zweck sind der Kern 12 und die Spulen 15, 16 so ausgeführt und angeordnet, dass die Elektroden 17A, 17B in der Mitte des Kernes 12 liegen und zwischen den äusseren Schenkeln des Kernes hindurch zentrisch herausgeführt sind und dass die Hauptfläche 43 des Kernes 12 zu einem durch das Messrohr 11 horizontal verlaufenden Längsschnitt 44 rechtwinklig steht.

## Patentansprüche

1. Verfahren zur intermittierenden Messung des Durchflusses einer elektrisch leitenden Flüssigkeit mit Hilfe eines induktiven Strömungswandlers (1), wobei der Durchfluss mittels Auf- und Abbau eines Magnetfeldes während Einzelmessungen gemessen wird, die durch wiederholte Verbindung mit bzw. Trennung von einer Gleichspannungsquelle voneinander abgegrenzt sind, dadurch gekennzeichnet, dass während jeder Einzelmessung

a) ein Kondensator (C1) mittels der Gleichspannungsquelle (20) geladen wird,

b) dass nach dem Laden die Gleichspannungsquelle (20) vom Kondensator (C1) getrennt wird und die Erregerspulen (15, 16) des Strömungswandlers (1) vom Kondensator (C1) gespeist werden, wobei das Magnetfeld nur so weit aufgebaut wird, dass der Sättigungszustand des Strömungswandlers (1) noch nicht erreicht wird,

c) dass dann die Energiezufuhr zum Strömungswandler (1) abgebrochen wird, wobei die beim dadurch hervorgerufenen Abbau des Magnetfeldes erzeugte Energie in den Kondensator (C1) zurückgeführt wird,

d) dass bei der Auswertung des vom Strömungswandler (1) erzeugten Ausgangssignales auch der während des Magnetfeldabbaus ohne Energiezufuhr entstehende Teil des Ausgangssignales als Nutzsignal ausgewertet wird,

e) dass nach der Auswertung des Nutzsignales der Kondensator (C1) zwecks erneutem Laden für die nächste Einzelmessung wieder mit der Gleichspannungsquelle (20) verbunden wird, wobei die zugeführte Energie um die durch den Magnetfeldabbau während der vorhergehenden Einzelmessung zurückgewonnene Energie kleiner ist.

2. Verfahren nach Anspruch 1, dadurch gekennzeichnet, dass die Pole des Magnetfeldes im Strömungswandler (1) zwischen den Einzelmessungen wechseln.

3. Einrichtung zur Durchführung des Verfahrens nach Anspruch 1, mit einem Messrohr (11) für die Flüssigkeit, dem ein induktiver Strömungswandler (1) zugeordnet ist und mit einer an den Strömungswandler (1) angeschlossenen Schaltungsanordnung, dadurch gekennzeichnet,

dass die Schaltungsanordnung einen Treiber (2) für den induktiven Strömungswandler (1) und eine Auswerteschaltung für die vom Strömungswandler (1) erzeugten Ausgangssignale aufweist,

wobei der Treiber (2) einen Kondensator (C1) aufweist, der über ein elektronisch steuerbares Schaltelement (T1) an einer Batterie (20) angeschlossen ist,

dass die Erregerspulen (15, 16) des induktiven Strömungswandlers (1) über weitere steuerbare Schaltelemente (T2 bis T5) und zugehörige, zum jeweiligen Schaltelement parallel liegende Dioden (D2 bis D5) an den Kondensator (C1) angeschlossen sind, und

dass logische Glieder (25 bis 30) vorgesehen sind, durch welche die Schaltelemente (T2 bis T5) in zwei entgegengesetzten Polungen zum Anschluss der Erregerspulen (15, 16) an den Kondensator (C1) betätigbar sind,

wobei bei Betätigung der Schaltelement (T2, T3) für die erste Polung oder der Schaltelemente (T4, T5) für die zweite, entgegengesetzte Polung den Erregerspulen (15, 16) zwecks Magnetfeldaufbaus Energie aus dem Kondensator (C1) zugeführt wird, und wobei bei der Sperrung der Schaltelemente (T2, T3 bzw. T4, T5) die beim Magnetfeldabbau erzeugte Energie über die zugehörigen parallel liegenden Dioden (D2, D3 bzw. D4, D5) in den Kondensator (C1) zurückgeführt wird,

so dass die beim Magnetfeldabbau während einer Einzelmessung freiwerdende Energie bei der nächsten Einzelmessung ausgenutzt werden kann.

4. Einrichtung nach Anspruch 3, dadurch gekennzeichnet, dass der Strömungswandler (1) zwei E-förmige Kernhälften (13, 14) aufweist, dass die freien Endpartien der Schenkel dieser Kernhälften einander zugeordnet sind, dass der mittlere Schenkel der jeweiligen Kernhälfte mit einer Erregerspule (15, 16) versehen ist, dass sich zwischen den freien Endpartien der mittleren Schenkel das Messrohr (11) befindet und dass senkrecht zur Längsrichtung der Schenkel Elektroden (17A, 17B) zur Herausführung der im Messmedium induzierten Signale aus dem Strömungswandler angeordnet sind, die durch Kanäle (19) in den Endpartien der äusseren Schenkel der Kernhälften hindurchgehen.

5. Einrichtung nach Anspruch 3, dadurch gekennzeichnet, dass die Auswerteschaltung einen Differenzverstärker (4) enthält, an dessen Eingänge Elektroden (17A, 17B) des induktiven Strömungswandlers (1) angeschlossen sind, dass der Ausgang des Differenzverstärkers (4) über einen Integrator (5) an einen Komparator (6) angeschlossen ist, mit dessen Hilfe ein Fenster zum Durchlassen eines Signals von konstanter Frequenz gebildet wird, und dass eine Anzeigeeinheit (10) für die Anzeige der gemessenen Werte vorgesehen ist.

6. Einrichtung nach Anspruch 4, dadurch gekennzeichnet, dass der Kern (12) und die Spulen (15, 16) so ausgeführt und angeordnet sind, dass der Strömungswandler (1) in bezug auf die Elektroden (17A, 17B) symmetrisch ist, wozu die Elektroden (17A, 17B) in der Mitte des Kernes (12) liegen und zwischen den äusseren Schenkeln des Kernes hindurch zentrisch herausgeführt sind und wozu die Hauptfläche des Kernes (12) zu einem durch das Messrohr (11) horizontal verlaufenden Längsschnitt rechtwinklig steht.

## Revendications

1. Procédé pour réaliser la mesure intermittente du débit d'un liquide électriquement conducteur à l'aide d'un transducteur inductif d'écoulement (1), le débit étant mesuré par établissement et suppression d'un champ magnétique pendant des mesures individuelles, qui sont délimitées les unes des autres par l'établissement répété d'une liaison avec une source de tension continue et d'une séparation vis-à-vis de cette source, caractérisé en ce que, pendant chaque mesure individuelle,

a) un condensateur (C1) est chargé par une source de tension continue (20),

b) qu'après l'opération de charge, la source de tension continue (20) est déconnectée du condensateur (C1), et les bobines d'excitation (15, 16) du transducteur d'écoulement (1) sont alimentées par le condensateur (C1), le champ magnétique n'étant établi que dans la mesure où l'état de saturation du transducteur d'écoulement (1) n'est pas encore atteint,

c) qu'ensuite l'envoi d'énergie au transducteur d'écoulement (1) est interrompu, auquel cas l'énergie produite lors de la suppression, provoquée de ce fait, du champ magnétique, est renvoyée dans le condensateur (C1),

d) que lors de l'évaluation du signal de sortie produit par le transducteur d'écoulement (1), la partie, qui apparaît pendant la suppression du champ magnétique sans apport d'énergie, du signal de sortie est évaluée en tant que signal utile,

e) qu'après l'évaluation du signal utile, le condensateur (C1) est à nouveau relié, en vue d'une nouvelle opération de charge pour la mesure individuelle suivante, à la source de tension continue (20), auquel cas l'énergie envoyée est diminuée de l'énergie récupérée sous l'effet de la suppression du champ magnétique pendant la mesure individuelle précédente.

2. Procédé selon la revendication 1, caractérisé en ce qu'entre les mesures individuelles les pôles du champ magnétique dans le transducteur d'écoulement (1) alternent.

3. Dispositif pour la mise en oeuvre du procédé selon la revendication 1, comportant un tube de mesure (11) pour le liquide, auquel est associé un transducteur inductif d'écoulement (1), et un montage raccordé au transducteur d'écoulement (1), caractérisé par le fait

que le montage contient un étage d'attaque (2) pour le transducteur inductif d'écoulement (1) et un circuit d'évaluation pour les signaux de sortie produits par le transducteur d'écoulement (1),

l'étage d'attaque (2) comportant un condensateur (C1), qui est raccordé à une batterie (20) par l'intermédiaire d'un élément de commutation (T1) à commande électronique,

que les bobines d'excitation (15, 16) du transducteur inductif d'écoulement (1) sont raccordées au condensateur, par l'intermédiaire d'autres éléments de commutation contrôlables (T2 à T5) et de diodes associées (D2 à D5), branchées chacune en parallèle sur un élément de commutation respectif, et

qu'il est prévu des circuits logiques (25 à 30), à l'aide desquels les éléments de commutation (T2 à T5) peuvent être actionnés, avec deux polarités opposées, pour le raccordement des bobines d'excitation (15, 16) au condensateur (C1),

auquel cas, lors de l'actionnement des éléments de commutation (T2, T3) pour la première polarité ou des éléments de commutation (T4, T5) pour la seconde polarité opposée, une énergie est envoyée à partir du condensateur (C1) aux bobines d'excitation (15, 16) pour l'établissement du champ magnétique, et lors du blocage des éléments de commutation (T2, T3 ou T4, T5), l'énergie produite lors de la suppression du champ magnétique est renvoyée dans le condensateur (C1) par l'intermédiaire des diodes associées (D2, D3 ou D4, D5) branchées en parallèle,

de sorte que l'énergie libérée lors de la suppression du champ magnétique pendant une mesure individuelle peut être utilisée pour la mesure individuelle suivante.

4. Dispositif selon la revendication 3, caractérisé en ce que le transducteur d'écoulement (1) comporte deux moitiés de noyau (13, 14) en forme de E, en ce que les parties d'extrémité libres des branches de ces moitiés de noyau sont associées l'une à l'autre de telle sorte que la branche centrale de chaque moitié de noyau est équipée d'une bobine d'excitation (15, 16), en ce que le tube de mesure (11) est disposé entre les parties d'extrémité libres des branches centrales, et en ce que des électrodes (17A, 17B) sont disposées perpendiculairement à la direction longitudinale des branches, pour extraire, hors du transducteur d'écoulement, les signaux induits dans le milieu de mesure, qui sortent à travers des canaux (19) situés dans les parties d'extrémité des branches extérieures des moitiés de noyaux.

5. Dispositif selon la revendication 3, caractérisé en ce que le circuit d'évaluation contient un amplificateur différentiel (4), aux entrées duquel sont raccordées des électrodes (17A, 17B) du transducteur d'écoulement (1), en ce que la sortie de l'amplificateur différentiel (4) est raccordée, par l'intermédiaire d'un intégrateur (5), à un comparateur (6), à l'aide duquel est formée une fenêtre pour le passage d'un signal de fréquence constante, et en ce qu'il est prévu une unité d'affichage (10) utilisée pour l'affichage des valeurs mesurées.

6. Dispositif selon la revendication 4, caractérisé en ce que le noyau (12) et les bobines (15, 16) sont réalisées et disposées de manière que le transducteur d'écoulement (1) est symétrique par rapport aux électrodes (17A, 17B), et qu'à cet effet les électrodes (17A, 17B) sont situées au milieu du noyau (12) et ressortent d'une manière centrée entre les branches extérieures du noyau, et la surface principale du noyau (12) est perpendiculaire à un plan de coupe longitudinal horizontal du tube de mesure (11).

## Claims

1. Method for the intermittent measurement of the throughflow of an electrically conducting liquid with the aid of an inductive flow transducer (1), wherein the throughflow is measured by means of build-up and decay of a magnetic field during individual measurements which are delimited one from the other by repeated connection with and separation from a direct voltage source, characterised thereby, that during each individual measurement,

a) a capacitor (C1) is charged by means of the direct voltage source (20),

b) that the direct voltage source (20) is separated from the capacitor (C1) after the charging and the excitation coils (15, 16) of the flow transducer (1) are fed from the capacitor (C1), wherein the magnetic field is built up only so far that the saturation state of the flow transducer (1) is not yet reached,

c) that the energy to the flow transducer (1) is then interrupted, wherein the energy produced on the decay of the magnetic field caused thereby is conducted back into the capacitor (C1),

d) that for the evaluation of the output signal produced by the flow transducer (1), also that part of the output signal, which arises without energy supply during the decay of the magnetic field, is evaluated as useful signal,

e) that after the evaluation of the useful signal, the capacitor (C1) is again connected with the direct voltage source (20) for the purpose of renewed charging for the next individual measurement, wherein the supplied energy is smaller by the energy regained by the decay of the magnetic field during the preceding individual measurement.

2. Method according to claim 1, characterised thereby, that the poles of the magnetic field in the flow transducer (1) change between the individual measurements.

3. Equipment for the performance of the method according to claim 1, with a measuring tube (11), which is associated with an inductive flow transducer (1), for the liquid and with a circuit arrangement connected to the flow transducer (1), characterised thereby,

that the circuit arrangement displays a driver (2) for the inductive flow transducer (1), and an evaluating circuit for the output signals produced by the flow transducer (1),

wherein the driver (2) displays a capacitor (C1), which is connected by way of an electronically controllable switching element (T1) to a battery (20),

that the excitation coils (15, 16) of the inductive flow transducer (1), are connected by way of further controllable switching elements (T2 to T5) and associated diodes (D2 to D5), which lie in parallel with the respective switching element, to the capacitor (C1),

that logic members (25 to 30) are provided, by which the switching elements (T2 to T5) are actuable in two opposite polarities for connection of the excitation coils (15, 16) to the capacitor (C1),

wherein energy from the capacitor (C1) is fed to the excitation coils (15, 16) for the purpose of build-up of the magnetic field on actuation of the switching elements (T1, T2) for the first polarity or the switching elements (T4, T5) for the second and opposite polarity and wherein the energy produced during the decay of the magnetic field on the blocking of the switching elements (T2, T3 or T4, T5) is conducted by way of the associated, parallelly connected diodes (D2, D3 or D4, D5) back into the capacitor (C1),

so that the energy becoming free on the decay of the magnetic field during one individual measurement can be utilised during the next individual measurement.

4. Equipment according to claim 3, characterised thereby, that the flow transducer (1) displays two E-shaped core halves (13, 14), that the free end portions of the limbs of these core halves are one associated with the other, that the middle limb of the respective core half is provided with an excitation coil (15, 16), that the measuring tube (11) is disposed between the free end portions of the middle limbs and that electrodes (17A, 17B), which pass through channels (19) in the end portions of the outer limbs of the core halves, are arranged perpendicularly to the longitudinal direction of the limbs for the leading-out of the signals, which were induced in the measurement medium, from the flow transducer.

5. Equipment according to claim 3, characterised thereby, that the evaluating circuit contains a differential amplifier (4), to the inputs of which the electrodes (17A, 17B) of the inductive flow transducer (1) are connected, that the output of the differential amplifier (4) is connected by way of an integrator (5) to a comparator (6), with the aid of which a window is formed for letting a signal of constant frequency through and that an indicating unit (10) is provided for the indication of the measured values.

6. Equipment according to claim 4, characterised thereby, that the core (12) and the coils (15, 16) are so constructed and arranged that the flow transducer (1) is symmetrical with respect to the electrodes (17A, 17B), for which purpose the electrodes (17A, 17B) lie in the centre of the core (12) and are led out centrally through between the outer limbs of the core and for which purpose the principal area of the core (12) stands at right angles to a longitudinal section extending horizontally through the measuring tube (11).

FIG. 1

MAG-FELD
ERZEUGUNG
UND
MESSELEKTRODEN

DIFFERENZ
VERSTÄRKER

INTEGRATOR

KOMPARATOR

EP 0 196 559 B1

**EP 0 196 559 B1**

FIG. 2

FIG. 3

FIG. 4

FIG. 5

HÖHERE
FREQUENZ

IMPULS-
ZAHL

FIG. 6

FIG. 7